Europäisches Patentamt

European Patent Office

Office européen des brevets

(19)

(11) Numéro de publication : **0 035 423**
**B1**

(12) **FASCICULE DE BREVET EUROPÉEN**

(45) Date de publication du fascicule du brevet :
**30.01.85**

(21) Numéro de dépôt : **81400206.9**

(22) Date de dépôt : **10.02.81**

(51) Int. Cl.⁴ : **G 01 B 11/24, G 01 B 11/02**

(54) **Système de détection et de localisation de discontinuité de surface par faisceau lumineux.**

(30) Priorité : **12.02.80 FR 8003068**

(43) Date de publication de la demande :
**09.09.81 Bulletin 81/36**

(45) Mention de la délivrance du brevet :
**30.01.85 Bulletin 85/05**

(84) Etats contractants désignés :
**BE CH DE GB IT LI SE**

(56) Documents cités :
**DE-A- 2 628 543**
**FR-A- 1 504 539**
**FR-A- 2 327 513**
**FR-A- 2 410 267**

(73) Titulaire : **COMMISSARIAT A L'ENERGIE ATOMIQUE**
**Etablissement de Caractère Scientifique Technique**
**et Industriel**
**B.P. 510**
**F-75752 Paris Cedex 15 (FR)**

(72) Inventeur : **Cornu, Jean**
**34, route de Verton**
**F-44200 Nantes (FR)**
Inventeur : **Detriche, Jean-Marie**
**6, Bois de la Ferme**
**F-78240 Chambourcy (FR)**
Inventeur : **Tiret, Bernard**
**52, Avenue J. Ferry**
**F-55100 Verdun (FR)**
Inventeur : **Galera, Richard**
**16, rue Gabriel Péri**
**F-38000 Grenoble (FR)**
Inventeur : **Jorge, Gérard**
**11, rue Père Corentin**
**F-75014 Paris (FR)**
Inventeur : **Biava, Dominique**
**69, rue Trosy**
**F-92140 Clamart (FR)**
Inventeur : **Marchal, Paul**
**1-13, Résidence du Parc du Château de Courcelles**
**F-91190 Gif-sur-Yvette (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

## Description

La présente invention concerne un système de détection et de localisation de discontinuité de surface par un faisceau lumineux, ce système est plus paticulièrement destiné à la détection de toute discontinuité formant une ligne sur cette surface, ou de toute discontinuité formant deux lignes en regard sur cette surface. Dans ce dernier cas, cette discontinuité peut être par exemple, le joint délimité par les bords en regard de deux tôles à souder.

Le sytème de détection de l'invention permet de déterminer, avec une très grande exactitude, par rapport à un système de coordonnées de référence, le tracé d'une discontinuité de surface ; il peut être destiné à l'équipement de têtes de soudage auto-adaptives, qui doivent suivre automatiquement un joint à souder ; il est bien évident cependant, que ce système peut également équiper tous les robots industriels qui doivent suivre des tracés précis.

Le développement de la robotique correspond à la nécessité d'augmenter la production dans tous les domaines industriels où l'utilisation de machines spéciales n'est pas nécessaire ; ce développement correspond aussi à la réduction des contraintes d'organisation et de planification des fabrications de petites et moyennes séries. Enfin, la robotique permet de réduire les investissements en utilisant des machines adaptives qui permettent de remplacer des machines spéciales, destinées au traitement d'un même produit en grande série. La robotique permet également de résoudre des problèmes engendrés par des difficultés techniques ou par des travaux insalubres ou dangereux ; l'industrie a un grand besoin de ces moyens évolués de manutention, manipulation ou fabrication. En particulier, le soudage à l'arc, avec ou sans métal d'apport, soulève aujourd'hui de nombreux problèmes spécifiques qui rendent nécessaire le développement de robots adaptés à cette technique. Dans le domaine du soudage, il est souvent nécessaire de réaliser le suivi du joint à souder entre deux tôles, avec une très grande précision, de façon rapide et reproductible. On sait en effet, que l'assemblage par soudage d'un grand nombre d'éléments, avec une grande précision, sans possibilité de reprise ou d'erreur, nécessite une main-d'oeuvre très qualifiée et rare ; il est souvent impossible d'assurer une production intensive en raison de la fatigue et de la contrainte physique résultant de la précision demandée. Lorsque les pièces à souder sont de très grande dimension, il est souvent nécessaire qu'elles soient préchauffées avant soudage, ce qui oblige le soudeur à revêtir une protection spéciale pour les approcher. Il en résulte des conditions de travail insalubres et dangeureuses. Lorsque le soudage est effectué entre des éléments déformables à la chaleur, toute machine spéciale de soudure programmée sur une trajectoire très précise ne peut s'adapter à ces déformations qui peuvent atteindre plusieurs centimètres dans certains cas.

Il résulte de ces observations que dans de nombreux domaines industriels utilisant la robotique, il est nécessaire de disposer de système de détection de discontinuité de surface permettant la commande de robots qui doivent suivre cette discontinuité avec une très grande précision.

Un système connu de détection de profil d'une surface est décrit dans le brevet français FR-A-2327513. Ce système comprend :

— un détecteur comportant des moyens d'émission d'un faisceau incident convergent de lumière monochromatique, en direction de la discontinuité, des moyens de réception de la lumière réfléchie sur la surface et un transducteur optoélectronique de la lumière réfléchie, associé aux moyens de réception ;

— des moyens pour déplacer le détecteur de façon que le faisceau incident balaye transversalement la discontinuité et le voisinage de celle-ci.

Ce système connu ne permet pas toutefois de déterminer par rapport à un système de coordonnées de référence avec une très grande précision, le tracé d'une discontinuité.

La présente invention a pour but de remédier à ces inconvénients et notamment, de réaliser un système de détection de discontinuité, dont la mise en oeuvre est simple et qui présente une très grande précision dans la détermination de la forme de cette discontinuité.

L'invention a pour objet un système de détection et de localisation de discontinuité de surface par un faisceau lumineux, comprenant :

— un détecteur comportant des moyens d'émission d'un faisceau incident convergent de lumière monochromatique, en direction de la discontinuité, des moyens de réception de la lumière réfléchie sur la surface et un transducteur optoélectrique de la lumière réfléchie, associé aux moyens de réception ;

— des moyens pour déplacer le détecteur de façon que le faisceau incident balaye transversalement la discontinuité et le voisinage de celle-ci ; caractérisé en ce qu'il comprend en outre :

— un porteur capable de mouvoir les moyens de déplacement du détecteur, le long de la discontinuité, ce porteur étant associé à des moyens de repérage de sa position par rapport à un système fixe de coordonnées, les moyens de déplacement étant constitués par un bras mobile par rapport au porteur, le détecteur étant fixé sur ce bras qui est commandé par des moyens de déplacement propres fixés au porteur ;

— des moyens de repérage, reliés aux moyens de réception du détecteur, pour repérer les positions angulaires successives de ce détecteur, par rapport à une direction de référence liée au porteur, lorsque ce porteur occupe différentes positions le long de la discontinuité et lorsque le faisceau incident passe sur la discontinuité.

Selon une autre caractéristique de l'invention, les moyens de repérage de chaque position angulaire du détecteur comprennent des moyens pour déterminer la position angulaire du détecteur par rapport à ladite direction de référence, à chaque fois que le faisceau incident passe par un point situé sur la discontinuité.

Selon une autre caractéristique, les moyens pour déterminer la position angulaire du détecteur à chaque fois que le faisceau incident passe par un dit point situé sur la discontinuité, comprennent des moyens pour enregistrer chaque impulsion provenant du transducteur optoélectronique et des moyens pour enregistrer pour chacune de ces implusions, la valeur de l'angle compris entre une ligne de repérage de position du détecteur et ladite direction de référence, cette ligne de repérage de position du détecteur passant par un point déterminé du porteur et par un point du détecteur, caractéristique de la position du détecteur.

Selon une autre caractéristique, la discontinuité étant délimitée par deux lignes en regard, les moyens de repérage de chaque position angulaire du détecteur comprennent des moyens pour déterminer la position angulaire du détecteur par rapport à ladite direction de référence, à chaque fois que le faisceau incident passe un point situé dans l'intervalle séparant les deux lignes délimitant la discontinuité.

Selon une autre caractéristique de l'invention, les moyens pour enregistrer chaque impulsion du détecteur comprennent un circuit de mise en forme de ces impulsions.

Selon une autre caratéristique, le circuit de mise en forme comprend un amplificateur à grand gain, associé à un ensemble de filtrage du bruit de fond accompagnant ces impulsions.

Selon une autre caractéristique, l'ensemble de filtrage comprend au moins un filtre associé à des moyens pour comparer le signal de sortie de ce filtre avec une tension continue de référence flottante correspondant au niveau moyen du signal sortant du filtre.

Selon une autre caractéristique, les moyens qui permettent de déterminer la position angulaire du détecteur, à chaque fois que le faisceau incident passe par un point situé entre et à égale distance des deux lignes délimitant la discontinuité, comprennent des moyens pour enregistrer chaque impulsion provenant du transducteur optoélectronique, ces impulsions présentant une durée correspondant au passage du faisceau incident dans l'intervalle séparant les deux lignes délimitant la discontinuité, des moyens pour mesurer la durée de chacune de ces impulsions, des moyens pour indiquer l'instant qui correspond à la moitié de cette durée et donc au passage du faisceau incident par un point situé entre et à égale distance des deux lignes délimitant la discontinuité, et des moyens pour enregistrer à cet instant la valeur de l'angle compris entre une ligne de repérage de position du détecteur et ladite direction de référence, cette ligne de repérage de position passant par un point déterminé du porteur et par un point du détecteur, caractéristique de la position du détecteur.

Selon une autre caractéristique, les moyens permettant de mesurer la durée de chaque impulsion du transducteur et pour indiquer l'instant correspondant à la moitié de cette durée comprennent une horloge associée à un compteur et à un circuit logique commandant le comptage des impulsions d'horloge pendant la durée de chaque impulsion du transducteur, une sortie de ce compteur délivrant un signal binaire correspondant à la moitié du nombre des impulsions d'horloge comptées pendant ladite durée.

Selon une autre caractéristique, les moyens qui permettent de mesurer la durée de chaque impulsion et d'indiquer l'instant correspondant à la moitié de cette durée comprennent en outre un registre apte à enregistrer le signal binaire correspondant à la moitié du nombre des impulsions d'horloge comptées pendant ladite durée et un comparateur recevant d'une part, le contenu de registre et, d'autre part, le signal binaire suivant, issu du compteur et correspondant aux impulsions d'horloge comptées pendant la durée de l'impulsion suivante, pour un autre passage du faisceau incident du détecteur, dans l'intervalle séparant les deux lignes délimitant la discontinuité, une sortie de ce comparateur délivrant une impulsion de commande des moyens d'enregistrement de la valeur dudit angle.

Selon une autre caractéristique, le bras mobile présente une forme telle que le détecteur soit situé sur la ligne passant par ledit point caractéristique de la position du détecteur et par ledit point déterminé du porteur.

Selon une autre caractéristique, les moyens d'émission du faisceau incident comprennent une source à laser, des moyens de focalisation du faisceau émis par la source, une fibre optique associée à ces moyens de focalisation et apte à diriger le faisceau focalisé sous un angle d'incidence constant, au voisinage de la ou des lignes délimitant la discontinuité, les moyens de réception comportant des moyens de focalisation de la lumière réfléchie correspondant au faisceau incident, et un filtre interférentiel interposé entre la surface et le transducteur optoélectronique, l'axe optique des moyens de focalisation de la lumière réfléchie du filtre interférentiel et du transducteur présentant un angle de réflexion égal à l'angle d'incidence.

Selon une autre caractéristique, le système comprend en outre une fibre optique de transmission de la lumière réfléchie.

D'autres caractéristiques et avantages de l'invention ressortiront mieux de la description qui va suivre, donnée à titre purement illustratif, en référence aux dessins annexés sur lesquels :

la figure 1 représente schématiquement un système conforme à l'invention, permettant une détection de discontinuité de surface, dans l'exemple de réalisation représenté sur cette figure, la discontinuité forme une ligne sur la surface ;

la figure 2 représente schématiquement un système conforme à l'invention, permettant une détection de discontinuité de surfaces, dans l'exemple de réalisation représenté sur cette figure, la discontinuité est formée par deux lignes sur la surface ;

la figure 3 représente schématiquement le détecteur du système de détection conforme à l'invention ; en a), ce détecteur est décalé par rapport à la discontinuité à détecter ; en b), le détecteur est en regard de cette discontinuité ; on suppose sur cette figure que la discontinuité est délimitée par deux lignes ;

la figure 4 est un schéma synoptique du détecteur appartenant au système de l'invention ;

la figure 5 est un diagramme représentant le signal de sortie du transducteur appartenant au détecteur ;

la figure 6 représente en a), une coupe transversale d'une surface présentant une discontinuité délimitée par deux lignes, en b) et c), des diagrammes montrant des signaux présents en sortie de certains moyens du système ;

la figure 7 est un diagramme donnant la vitesse de déplacement du détecteur, en fonction de l'angle que fait le bras supportant le détecteur, avec une direction fixe de référence, au cours du mouvement de balayage accompli par le détecteur ;

la figure 8 illustre schématiquement un mode de réalisation des moyens qui permettent de déplacer le détecteur, selon un mouvement alterné, dans une direction transversale par rapport à la discontinuité ;

les figures 9 et 10 illustrent schématiquement d'autres modes de réalisation des moyens précédents ;

la figure 11 représente schématiquement les moyens qui permettent dans le système de déterminer la position du détecteur par rapport à la direction fixe de référence, lorsque la discontinuité est délimitée par deux lignes et que le faisceau incident du détecteur passe par un point situé entre et à égale distance des lignes délimitant cette discontinuité ;

la figure 12 représente un signal obtenu en un point particulier du système lorsque celui-ci se déplace le long de la discontinuité.

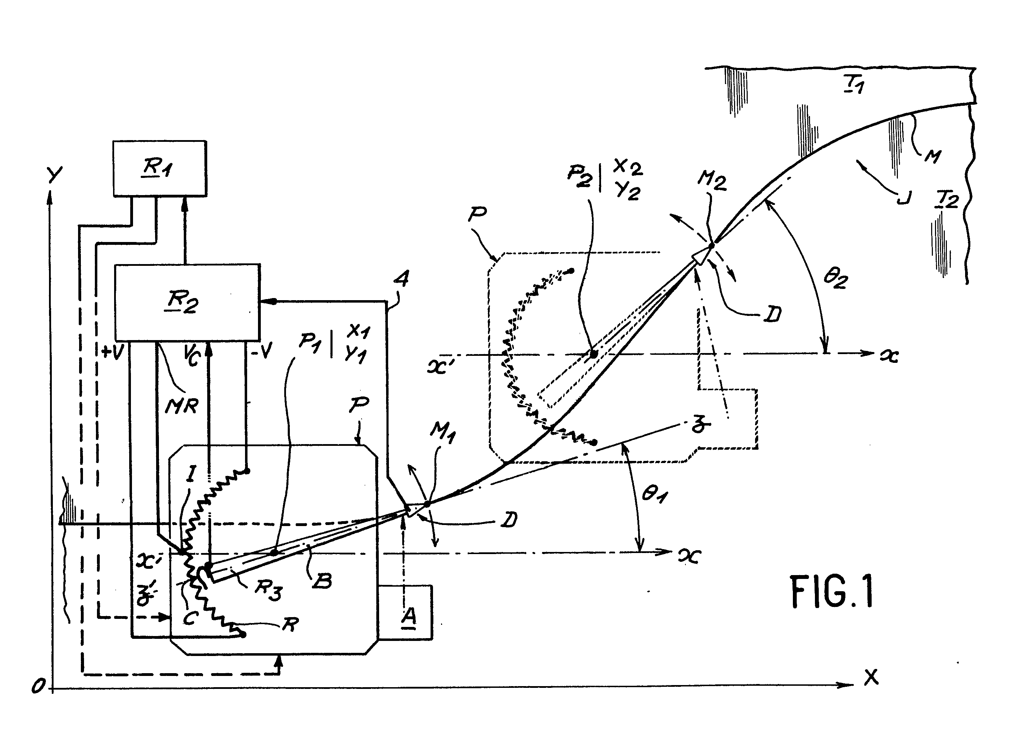

En référence à la figure 1, on a représenté un système de détection conforme à l'invention, permettant de détecter une discontinuité de surface : dans l'exemple de réalisation représenté sur la figure, cette discontinuité forme une ligne M délimitant deux portions $T_1$ et $T_2$ de cette surface. Le système de l'invention comprend un détecteur D, qui sera décrit plus loin en détail ; ce détecteur comporte des moyens d'émission d'un faisceau incident convergent de lumière monochromatique, en direction de la discontinuité, et de moyens de réception de la lumière réfléchie sur la surface, ainsi qu'un transducteur optoélectronique de cette lumière réfléchie. Le détecteur est porté par un bras B qui permet de le déplacer selon un mouvement alterné, transversalement par rapport à la ligne M représentant la discontinuité. Ce déplacement alterné est commandé par des moyens A qui seront décrits plus loin en détail. Les moyens de déplacement A sont liés à un porteur P, capable de se déplacer le long de la discontinuité, sous l'action de moyens de commande de changement de position $R_1$. Les changements de position du porteur sont réalisés par la combinaison de deux mouvements rectilignes respectivement parallèles à deux directions fixes de référence OX, OY. Les moyens de commande de changement de position $R_1$ comprennent également des moyens de repérage de chaque position du porteur par rapport aux deux axes de coordonnées de référence OX, OY. Ces moyens de déplacement et de repérage de la position du porteur sont constitués de manière connue et ne sont pas décrits ici en détail. Dans l'exemple décrit sur la figure, on suppose que grâce à l'action des moyens de changement de position et de repérage, le porteur passe de la position $P_1$, de coordonnées $X_1$, $Y_1$ à la position $P_2$ de coordonnées $X_2$, $Y_2$. Le système de l'invention comprend également des moyens $R_2$, $R_3$ qui permettent de repérer et d'enregistrer les positions successives $\theta_1$, $\theta_2$ du détecteur D par rapport à une direction x'x de référence, liée au porteur lorsque celui-ci occupe différentes positions, telles que $P_1$, $P_2$ le long de la discontinuité et lorsque le faisceau incident balaye transversalement cette discontinuité. Comme on le verra par la suite, ces moyens de repérage $R_2$, $R_3$ sont reliés au moyen de réception du détecteur. Les moyens de repérage $R_2$, $R_3$ comprennent en particulier des moyens qui permettent de déterminer la position du détecteur par rapport à la direction x'x de référence, à chaque fois que le faisceau incident passe par un point situé sur la ligne M représentant la discontinuité. Dans l'exemple de réalisation décrit, les moyens de repérage $R_2$ permettent de repérer les positions $\theta_1$, $\theta_2$ du détecteur, lorsque le faisceau incident du détecteur passe respectivement par les points $M_1$, $M_2$. Les moyens A qui permettent de déplacer le détecteur de façon que le faisceau incident balaye la discontinuité et le voisinage de celle-ci, transversalement, sont bien entendu liés au porteur ; il est bien évident qu'au cours du placement du porteur P le long de la discontinuité, le repérage des positions angulaires $\theta_1$ et $\theta_2$ du détecteur, par rapport à la direction de référence x'x se fait en correspondance avec les coordonnées $X_1$, $Y_1$, $X_2$, $Y_2$ des positions successives $P_1$ et $P_2$ du porteur. Comme on le verra par la suite, les moyens de réception du détecteur D sont reliés à un transducteur optoélectronique qui délivre une impulsion à chaque fois que le faisceau incident de lumière convergente émis par le détecteur passe sur la discontinuité représentée par la ligne M. Les moyens $R_1$, $R_2$ qui permettent de déterminer la position du détecteur seront décrits plus loin en détail ; ils comprennent des moyens pour enregistrer chaque impulsion provenant du détecteur ; chacune de ces impulsions correspond au passage du faisceau incident par un point situé sur la ligne M ; enfin, les moyens qui permettent de déterminer la position du détecteur comprennent des moyens pour mesurer et pour enregistrer à chaque instant la valeur de l'angle θ compris la ligne Z'Z de repérage du détecteur et la direction de référence x'x. la valeur de cet angle peut être facilement mesurée grâce à un potentiomètre R à curseur mobile C alimenté symétriquement par des sources de tension de valeurs égales, mais opposées + V et − V, par rapport au point milieu I du potentiomètre, relié à la masse de référence MR. Les moyens $R_2$ qui permettent de déterminer la position du détecteur à chaque fois que le faisceau incident traverse la discontinuité seront décrits plus loin en détail.

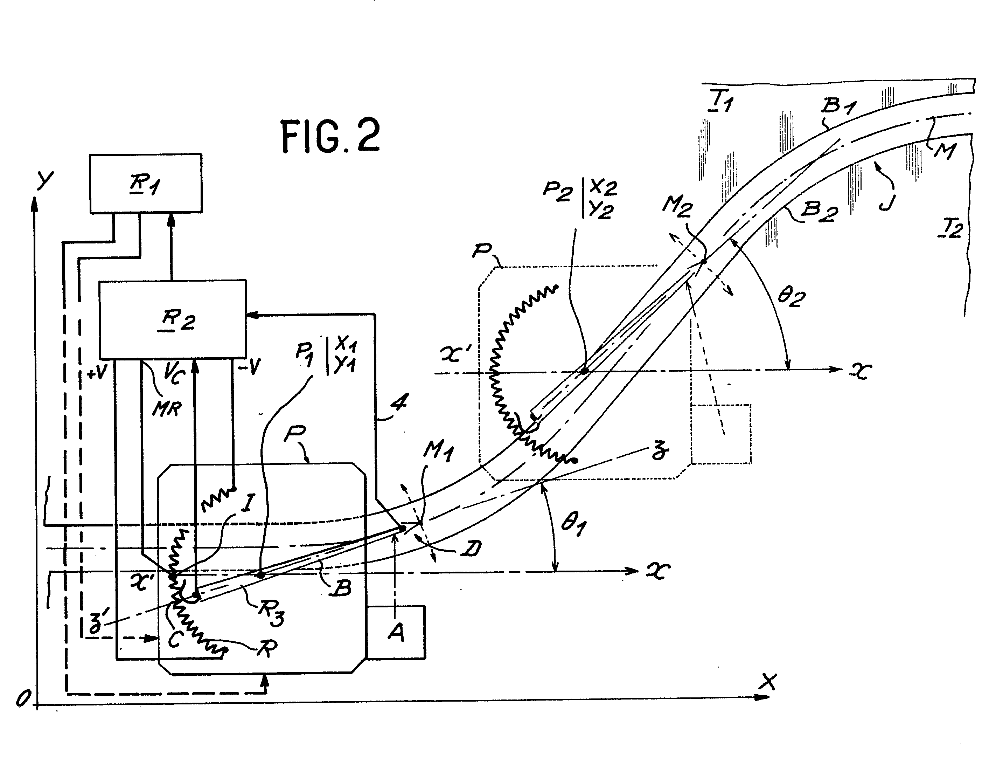

En référence à la figure 2, on a représenté un système de détection conforme à l'invention, permettant de détecter une discontinuité J sur une surface, lorsque cette discontinuité est délimitée sur cette surface par deux lignes $B_1$, $B_2$, en regard. Elle peut être constituée par le joint à souder entre les bords de deux tôles $T_1$, $T_2$. Les mêmes références désignent les mêmes éléments sur cette figure et sur la figure 1.

Comme indiqué sur la figure 1, le système de l'invention comprend notamment des moyens $R_2$, $R_3$ qui permettent de repérer et d'enregistrer les positions successives $\varphi_1$, $\varphi_2$ du détecteur D par rapport à une direction x'x de référence, liée au porteur lorsque celui-ci occupe différentes positions, telles que $P_1$, $P_2$ le long de la disccntinuité et lorsque le faisceau incident passe entre les lignes $B_1$, $B_2$ délimitant cette discontinuité. Comme on le verra par la suite, les moyens de repérage $R_2$, $R_3$ comprennent en particulier des moyens qui permettent de déterminer la position du détecteur par rapport à la direction x'x de référence, à chaque fois que le faisceau incident passe par un point situé entre et à égale distance des deux lignes $B_1$, $B_2$. Comme on le verra par la suite, les moyens de réception du détecteur D sont reliés à un transducteur optoélectronique qui délivre une impulsion à chaque fois que le faisceau incident de lumière convergente émis par le détecteur passe sur les lignes $B_1$, $B_2$ qui délimitent la discontinuité. Les moyens $R_1$, $R_2$ qui permettent de déterminer la position du détecteur seront décrits plus loin en détail ; ils comprennent des moyens pour enregistrer chaque impulsion provenant du détecteur et pour mesurer la durée de chacune de ces impulsions et des moyens pour indiquer l'instant qui correspond à la moitié de cette durée et donc au passage du faisceau incident par le point situé entre et à égale distance des lignes $B_1$, $B_2$. Les moyens $R_2$ qui permettent de déterminer la position du détecteur à chaque fois que le faisceau incident traverse la discontinuité seront décrits plus loin en détail.

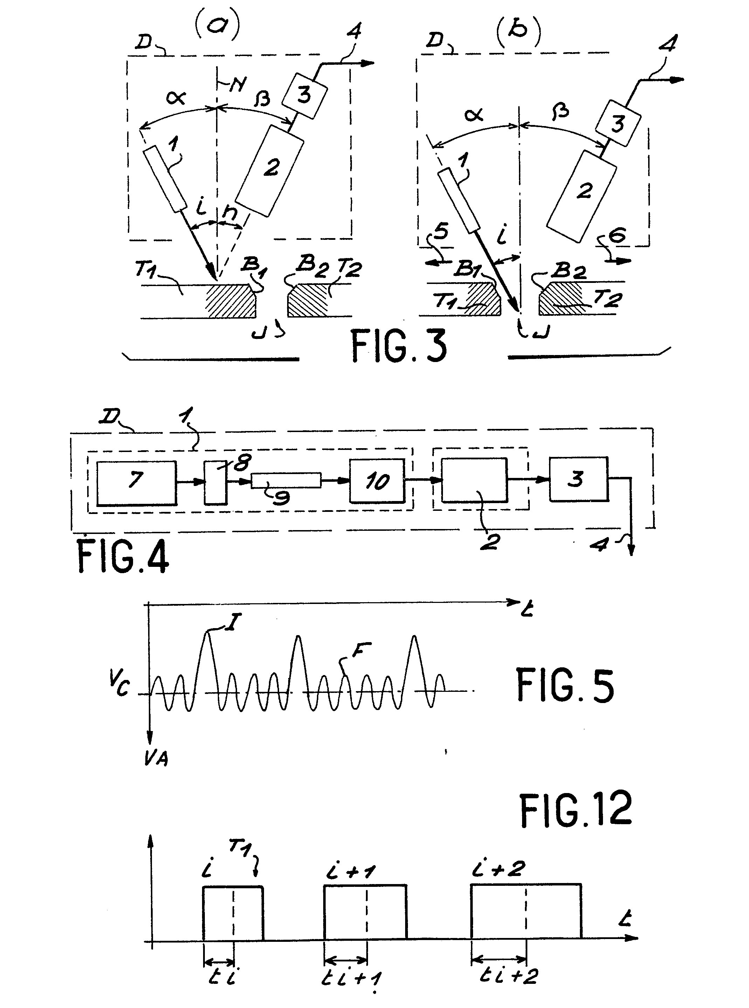

En référence à la figure 3, on a représenté un détecteur D du système de détection conforme à l'invention ; en a), le détecteur est décalé par rapport à la discontinuité J à détecter ; en b), le détecteur est en regard de la discontinuité. On suppose sur cette figure que la discontinuité est délimitée par deux lignes, mais il est évident qu'elle pourrait être formée d'une ligne unique.

Le détecteur comprend des moyens 1 d'émission d'une faisceau incident convergent de lumière monochromatique, en direction de la surface $T_1$, $T_2$ et des moyens 2 de réception de la lumière réfléchie sur la surface, associée à un transducteur optoélectronique 3, de cette lumière réfléchie. Ce transducteur optoélectronique délivre sur sa sortie 4 des signaux électriques dont l'amplitude dépend de l'intensité de la lumière réfléchie recueillie par les moyens de réception 2. Comme on le verra plus loin en détail, les signaux délivrés par le transducteur 3 sont des impulsions dont la durée est représentative de la distance entre les lignes $B_1$ et $B_2$ qui délimitent la discontinuité J. Le détecteur D est bien entendu, comme on l'a indiqué plus haut, animé d'un mouvement alterné, de direction parallèle à la surface $T_1$, $T_2$ ; le sens de ce mouvement alterné est indiqué par les flèches 5 et 6. Les moyens d'émission et de réception du faisceau lumineux sont disposés symétriquement par rapport à la normale $n$ au plan de tôles ($\alpha = \beta$). Il est bien évident que l'intensité de la lumière réfléchie, receuillie par les moyens de réception 2 présente un minimum lorsque le faisceau incident traverse la discontinuité J, c'est-à-dire lorsque le détecteur D occupe la position représentée en b) sur la figure 3. Cette lumière réfléchie présenterait aussi un minimum si la discontinuité était constituée par une ligne unique. Les moyens d'émission 1 et de réception 2 de la lumière sont disposés de façon que l'angle $i$ que fait le faisceau incident avec la normale $n$ à la surface est égal à l'angle de réflexion $r$ que fait le faisceau de lumière réfléchie avec cette normale $n$, quand le faisceau incident est réfléchi par l'une des tôles.

La figure 4 est un schéma synoptique du détecteur D représenté sur la figure 3. Ce détecteur comprend comme on l'a indiqué précédemment, des moyens d'émission 1 d'un faisceau incident convergent de lumière monochromatique, des moyens de réception 2 de la lumière réfléchie sur la surface, et un transducteur optoélectronique 3 de cette lumière réfléchie, associé aux moyens de réception 2. Les moyens d'émission 1 du faisceau incident convergent de lumière monocchromatique sont constitués par une source 7 de lumière cohérente, émise sous forme d'un faisceau très peu divergent et présentant une grande densité d'énergie par unité de surface. Cette source peut être constituée par un laser de type hélium-néon par exemple. Les moyens d'émission comprennent également des moyens de focalisation de la lumière émise par la source ; ces moyens de focalisation comprennent, d'une part un ensemble de focalisation 8 de la lumière émise par le laser 7 sur le coeur d'une fibre optique 9 et, d'autre part, d'un ensemble de focalisation 10 de la lumière sur la surface. Cette focalisation de la lumière est une condition importante car le diamètre du faisceau incident doit être aussi réduit que possible, de façon à ne pas dépasser la largeur du plus petit joint à détecter. Les moyens de focalisation 8 et 10 ont une focale qui est déterminée par le diamètre de la fibre et par la distance qui sépare l'extrémité de cette fibre du plan de mesure. Ces moyens de focalisation sont constituée de manière connue ; leur distance focale est réglable de manière à optimiser la concentration de l'énergie lumineuse au point de réflexion du faisceau incident sur la surface. Les moyens de réception 2 de la lumière réfléchie sur la surface sont constitués par un filtre interférentiel, de façon que le transducteur optoélectronique 3 ne reçoive qu'une lumière monochromatique correspondant à la longueur d'onde de la lumière émise par le laser, lorsque les faisceaux incidents et réfléchis sont pertubés par des rayonnements parasites ; ces rayonnements peuvent être ceux d'un arc électrique lorsque le système de détection de l'invention est utilisé pour détecter, par exemple, le joint existant entre deux tôles à souder. Une fibre optique peut éventuellement être interposée entre le filtre interférentiel et la surface, de manière à conduire le faisceau réfléchi jusqu'à ce filtre.

Les moyens de réception de la lumière réfléchie peuvent être entourés d'un écran de protection permettant d'éviter que le rayonnement de l'arc de soudure ne pertube la détection. Ils ne sont pas décrits en détail sur la figure.

Le transducteur optoélectronique 3 est une photodiode qui assure la conversion de l'énergie lumineuse du faisceau réfléchi, en énergie électrique. La ou les fibres optiques utilisées dans le système ne provoquent aucune atténuation de puissance lors du transport de la lumière et, lorsque le détecteur balaye le joint transversalement aux lignes qui le délimitent, ces fibres optiques présentent une grande résistance mécanique aux vibrations de grande amplitude et de basse fréquence.

La figure 5 est un diagramme représentant l'amplitude $V_A$ du signal de sortie du transducteur, en fonction du temps, lorsque le détecteur D balaye transversalement la discontinuité délimitée par deux lignes $B_1$ et $B_2$ ou formée d'une ligne unique M. Ce signal contient des impulsions I de grande amplitude, qui correspond aux passages du faisceau incident sur la discontinuité ; leur fréquence est double de la fréquence de balayage du détecteur ; ces impulsions sont accompagnées d'un bruit de fond représenté par des signaux parasistes d'amplitude et de durée variables selon les défauts et l'état de la surface étudiée. En effet, cette surface peut présenter des rayures ou des taches qui se manifestent comme un bruit vis-à-vis de l'impulsion de passage sur la discontinuité. La composante continue $V_C$ correspond à la réflexion moyenne du faisceau incident sur la tôle à souder. La valeur de cette composante continue dépend bien entendu du pouvoir réflecteur de la surface étudiée.

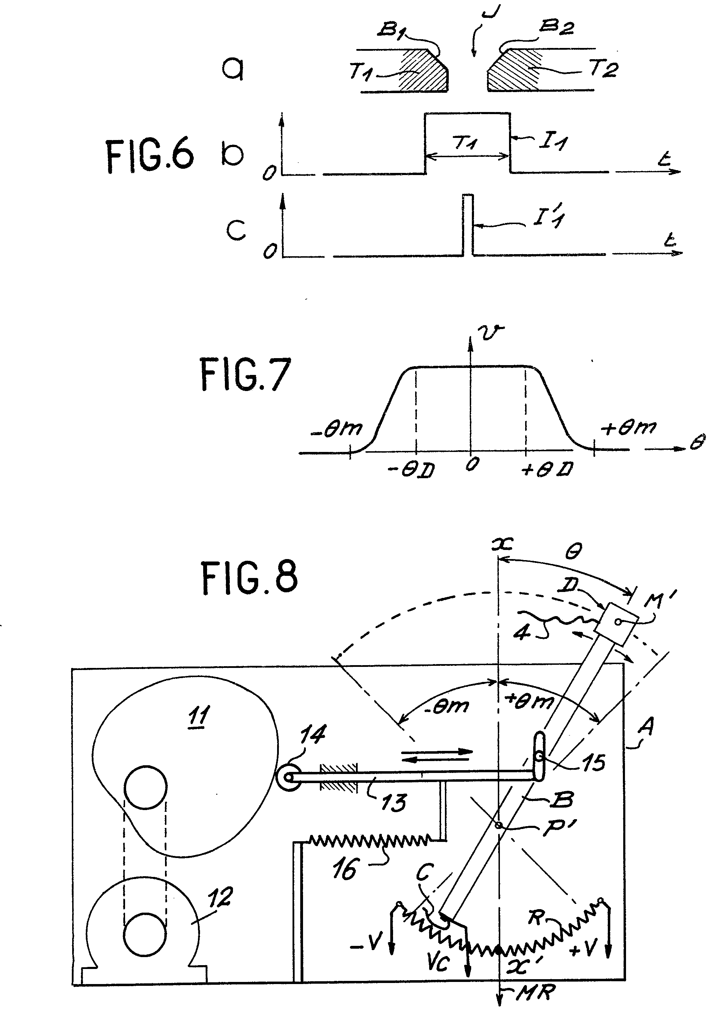

La figure 6 représente schématiquement en a), une coupe transversale de la surface ; cette surface présente une discontinuité J qui la divise en deux parties $T_1$, $T_2$ délimitées par les lignes $B_1$, $B_2$. Le diagramme b) représente schématiquement des impulsions $I_1$ correspond aux impulsions I présentes dans le signal de sortie du transducteur optoélectrique ; les impulsions $I_1$ résultent de l'enregistrement et de la mise en forme des impulsions I, dans des moyens appropriés qui font partie du système et qui seront décrits plus loin en détail. La durée variable $T_1$ de chaque impulsion $I_1$ correspond à la durée variable de chaque impulsion I de la figure 4 ; cette durée est proportionnelle à la distance séparant les lignes $B_1$, $B_2$ qui délimitent la discontinuité J. Comme on le verra par la suite, cette durée n'est pas prise en compte lorsque la discontinuité est formée par une ligne unique.

Sur le diagramme c) de la figure 6, on a représenté l'une des impulsions $I'_1$ permettant de repérer la moitié de la durée $T_1$ de chaque impulsion $I_1$ représentant la largeur de la discontinuité J, lorsque cette discontinuité est délimitée par deux lignes $B_1$, $B_2$ distantes l'une de l'autre.

Ces impulsions $I'_1$ permettent, comme on le verra par la suite, de commander l'enregistrement de la position angulaire du détecteur par rapport à la direction de référence, lorsque le faisceau incident passe par des points situés entre, et à égale distance des lignes $B_1$, $B_2$ délimitant la discontinuité lorsque celle-ci est très large. Il est bien évident qu'une succession d'impulsions telles que $I'_1$ est obtenue dans le système de l'invention pour chacune des impulsions I correspondant à la traversée de la discontinuité par le faisceau incident issu du détecteur.

Lorsque la discontinuité est formée par une ligne unique M, ce sont les impulsions $I_1$ qui permettent de déterminer les positions angulaires du détecteur par rapport à la direction de référence, lorsque le faisceau incident passe par un point de la ligne M.

La figure 7 est un diagramme représentant les variations de la vitesse v du détecteur, en fonction de l'angle θ, entre la direction du détecteur et la direction de référence, au cours du balayage de la discontinuité. Ce mouvement de balayage est périodique et symétrique par rapport à la position de repos du détecteur, supposée confondue avec la direction de référence x'x. Afin d'assurer un nombre de passages constant par unité de longueur de discontinuité, la fréquence du mouvement de balayage est directement proportionnelle à la vitesse d'avance du porteur. Dans le cas où la discontinuité à détecter est un joint entre deux tôles à souder, cette fréquence peut être de 10 hertz par exemple, pour une vitesse d'avance de deux mètres par minute. A titre indicatif, la fréquence minimale de balayage est de 0,3 hertz pour une vitesse minimale d'avance égale à 1 mm/s. Ces fréquences sont compatibles avec la mise en mouvement oscillatoire d'une masse de quelques centaines de grammes. La loi de vitesse du mouvement impose donc le couple d'entraînement nécessaire au balayage. Il en résulte qu'une loi purement sinusoïdale du mouvement induirait des accélérations de plusieurs g, lors des inversions de sens de balayage, ce qui est prohibitif ; pour un détecteur léger tel que celui qui est décrit dans l'invention, qui comprend des composants optiques et électroniques, la loi de vitesse retenue est celle qui est représentée sur la figure. Cette vitesse de balayage est constante sur une certaine distance de part et d'autre de la position de repos ; à proximité de chaque extrémité de trajectoire, le détecteur subit une décélération. La zone de décélération est représentée sur la figure par les positions $+ \theta_D$ et $- \theta_D$, à partir desquelles l'accélération du mouvement du détecteur est décroissante, jusqu'aux positions extrêmes respectives $- \theta_m$ et $+ \theta_m$.

En référence à la figure 8, on a représenté schématiquement un premier mode de réalisation des moyens qui permettent de déplacer le détecteur de façon que le faisceau incident balaye transversalement la discontinuité, entre les positions maximales angulaires $- \theta_m$ et $+ \theta_m$, par rapport à la direction de référence x'x. Dans ce premier mode de réalisation, le déplacement du détecteur est assuré grâce à une came en cœur 11, entraînée en rotation par un moteur 12 ; cette came en cœur coopère avec un levier de commande 13 du bras B supportant le détecteur. Une roulette 14 permet d'assurer le contact mécanique entre la came 11 et le levier 13, qui est articulé en 15, avec le bras B. Un ressort de rappel 16 permet de maintenir le contact entre la came 11 et la roulette 14. Le détecteur D est, comme on l'a vu précédemment, supporté par le bras B, et il est situé sur une ligne passant par un point M' caractéristique de la position du détecteur, et par un point P' déterminé du porteur ; ce point P' correspond par exemple aux points $P_1$ et $P_2$ des figures 1 et 2. Le bras B est associé aux moyens qui permettent d'enregistrer la posistion angulaire $\theta$ du détecteur, par rapport à la direction de référence x'x ; comme on l'a vu précédemment, ces moyens sont constitués notamment par un potentiomètre R dont le curseur C présente une tension $V_C$ proportionnelle à l'angle $\theta$ représentant la position angulaire du détecteur par rapport à la direction de référence x'x qui passe par le point milieu du potentiomètre R, porté au potentiel de référence MR. Les références $- V$, $+ V$ et MR indiquent respectivement sur cette figure, les potentiels auxquels sont portés les extrémités et le curseur du potentiomètre R. On verra par la suite comment la position angulaire $\theta$ du détecteur par rapport à la direction de référence x'x peut être déterminée à partir de la tension $V_C$ lorsque le faisceau incident de lumière convergente issu du détecteur, passe par un point situé entre et à égale distance des lignes délimitant la discontinuité ou par un point de cette discontinuité. Dans l'exemple de réalisation qui vient d'être décrit, la loi du mouvement du détecteur D est bien entendu conforme au diagramme de vitesse représenté sur la figure 7.

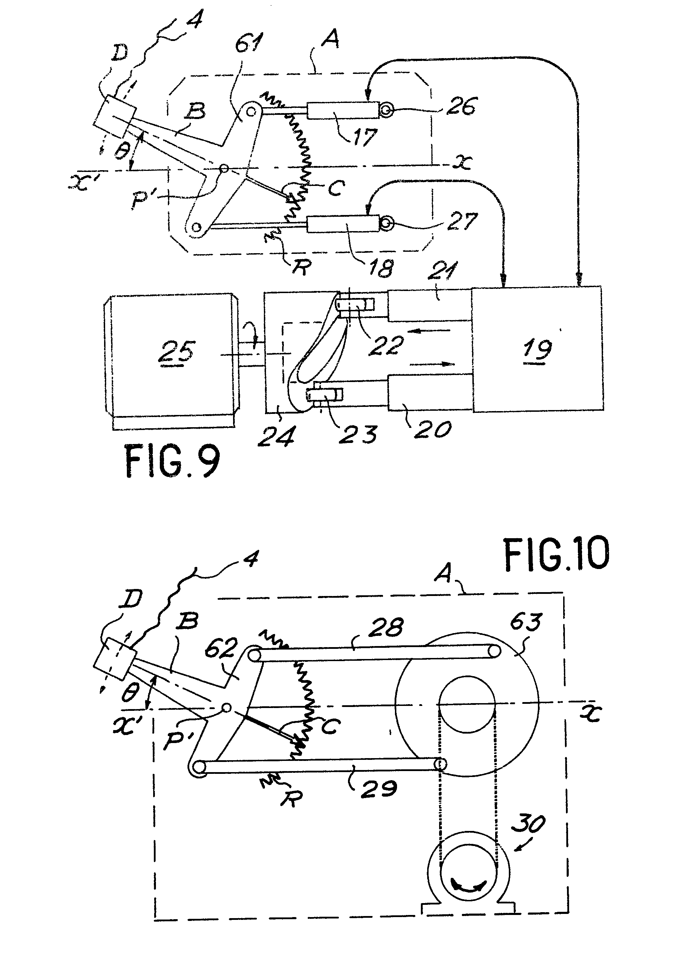

En référence à la figure 9, on a représenté un autre mode de réalisation des moyens qui permettent de déplacer le détecteur selon un balayage transversal à la discontinuité. Dans cet autre mode de réalisation, le bras B qui supporte le détecteur D oscille autour du point déterminé P' du porteur, grâce à l'action des moyens A ; ces moyens comprennent un support oscillant 61, commandé par des vérins hydrauliques 17, 18. Ces vérins sont alimentés par un circuit hydraulique 19, relié à des pistons 20, 21 qui s'appuient, par l'intermédiaire des roulettes 22, 23 sur une came en cloche 24, entraînée en rotation par un moteur 25. Les mouvements alternés des pistons 20, 21 sont communiqués en phase aux vérins hydrauliques 17, 18 qui, eux-mêmes, communiquent ce mouvement alterné au support oscillant 61. Bien entendu, les vérins 17, 18 peuvent subir une très légère rotation autour de leurs points de fixation 26, 27. Comme précédemment, l'angle $\theta$ que fait la direction du détecteur par rapport à la direction de référence x'x est repéré grâce au curseur C du potentiomètre R.

En référence à la figure 10, on a représenté un autre mode de réalisation des moyens A qui permettent de déplacer le détecteur selon un mouvement alterné, transversalement à la discontinuité. Selon cet autre mode de réalisation, les moyens de déplacement sont du type « à cabestan ». Le bras B qui supporte le détecteur est fixé à un support 62 oscillant autour du point P', grâce à l'action d'un cabestan 63 qui transmet son mouvement au support 62, par l'intermédiaire des câbles 28, 29. Ce cabestan est entraîné par un moteur 30, selon un mouvement alterné, qui permet au détecteur de suivre une loi de variation de vitesse conforme à celle qui est représentée sur la figure 7. Cette loi de variation de vitesse est obtenue en commandant le moteur par une tension qui présente la forme d'une dent de scie tronquée et qui est appliquée sur l'induit du moteur à courant continu. Comme dans les modes de réalisation précédents, la position angulaire $\theta$ du détecteur, par rapport à la direction de référence x'x, est obtenue grâce au potentiomètre R qui n'est pas représenté en détail sur la figure. Dans tous les modes de réalisation des moyens A, la référence 4 représente la sortie du transducteur optoélectronique du détecteur.

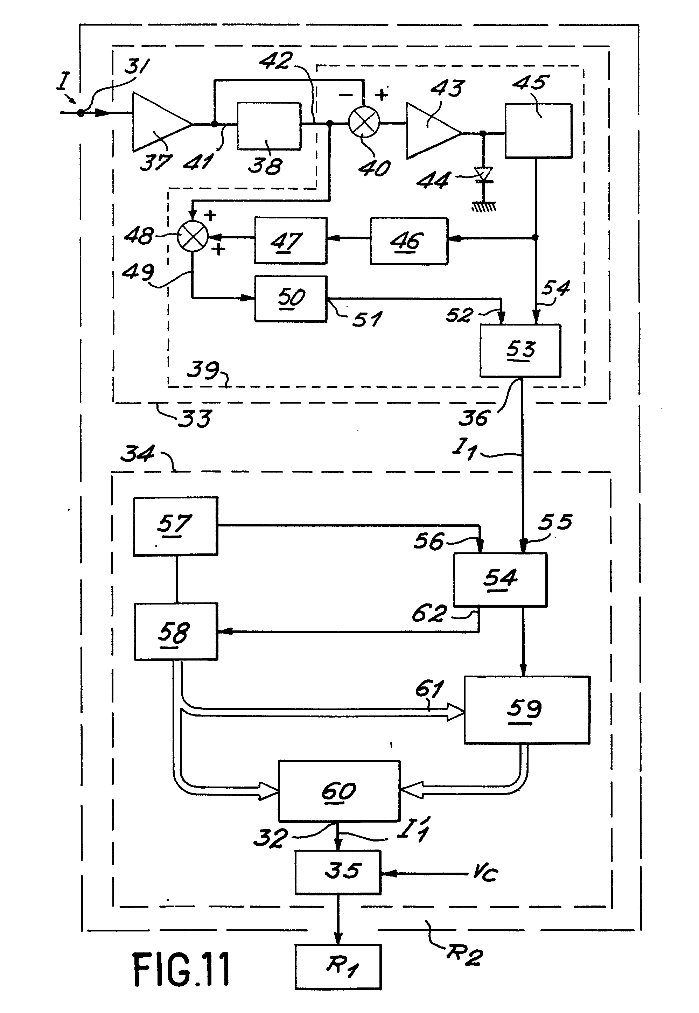

En référence à la figure 11, on a représenté schématiquement les moyens $R_2$ qui, en liaison avec le potentiomètre R et le curseur C de celui-ci, permettent de déterminer la position angulaire du détecteur, par rapport à la direction fixe x'x de référence, à chaque fois que le faisceau incident passe par un point de la discontinuité. Ces moyens reçoivent en 31 le signal en provenance de la sortie 4 du transducteur 3, et délivrent sur leur sortie 32 une impulsion $I'_1$, à chaque fois que le faisceau incident issu du détecteur passe par un point de la discontinuité. Ce sont ces impulsions qui permettent de situer les positions angulaires successives du détecteur par rapport à la direction fixe de référence, lorsque le porteur occupe différentes positions le long de la discontinuité. Comme on l'a vu précédemment, le signal de sortie du détecteur est formé d'une succession d'impulsions I, dont la durée correspond à la largeur de la discontinuité ; chaque impulsion I correspond au passage du faisceau sur la discontinuité. Les moyens $R_2$ comprennent des moyens 33 qui permettent d'enregistrer les impulsions provenant du détecteur 3 et des moyens 34 qui permettent d'indiquer par des impulsions $I'_1$ l'instant correspondant à la moitié de la durée de chacune des impulsions I ; les impulsions $I'_1$ commandent des moyens constitués de manière connue qui permettent d'enregistrer, pour chaque impulsion $I'_1$, la valeur de l'angle θ correspondant à la position angulaire du détecteur ; la valeur de cet angle est proportionnelle à la tension $V_C$ prélevée à chaque impulsion $I'_1$, sur le curseur C du potentiomètre R.

Les moyens 33 qui permettent d'enregistrer les impulsions I en provenance du détecteur 3 sont constitués de manière à délivrer sur leur sortie 36 des impulsions $I_1$ dont la durée correspond à celle des impulsions I, durée qui est représentative de la distance séparant les lignes $B_1$ et $B_2$ qui délimitent la discontinuité. Ces moyens 33 comprennent un circuit de mise en forme des impulsions I, constitué par un amplificateur 37 du signal issu du détecteur ; ce signal qui a été représenté sur la figure 4, est la somme du signal utile, du courant d'obscurité du transducteur, de la lumière du jour, du rayonnement lumineux parasite et il dépend du pouvoir de réflexion des tôles. Les moyens 33 permettent de supprimer la composante continue du signal issu du détecteur et de comparer ce signal avec une tension continue de référence flottante. A cet effet, l'amplificateur à grand gain 37 est associé à un ensemble de filtrage du bruit de fond accompagnant les impulsions I. Cet ensemble de filtrage comprend au moins un filtre 38 qui est associé à des moyens 39 qui permettent de comparer le signal de sortie de ce filtre avec une tension continue de référence flottante, correspondant au niveau moyen du signal sortant de ce filtre. Le filtre 38 est de type passe-bas et permet d'obtenir sur sa sortie un signal représentatif du bruit accompagnant les impulsions I. Un comparateur 40 permet de comparer le signal présent à l'entrée 41 du filtre avec son signal de sortie 42. Le signal de sortie de ce comparateur est un signal représentatif de la différence entre le signal utile et sa valeur moyenne. Ce signal de sortie est amplifié dans un amplificateur 43, puis détecté grâce à une diode 44. Le signal détecté traverse alors un filtre passe-bas 45, qui assainit ce signal détecté en supprimant une partie des parasites qui l'accompagnent. Le signal de sortie du filtre 45 est envoyé sur l'entrée d'un filtre 46, de type passe-bas, qui permet d'obtenir la valeur moyenne du signal détecté ; le signal de sortie de ce filtre est alors significatif du pouvoir réflecteur de la surface traitée par le système. Après passage dans un atténuateur 47, le signal ainsi détecté est additionné par l'additionneur 48 au signal de sortie 42 du filtre 38. Le signal de sortie 49 de l'additionneur 48 traverse ensuite un atténuateur 50 qui délivre en sortie 51 un signal de référence flottante correspondant au niveau moyen du bruit de fond accompagnant le signal utile. La sortie 51 de l'atténuateur 50 est reliée à l'entrée 52 d'un comparateur 53, qui reçoit d'autre part, sur une entrée 54, le signal détecté et filtré provenant du filtre 45. La sortie 36 du comparateur 53 délivre

donc des impulsions $I_1$ dont la durée est fonction de la durée des impulsions I présentes à l'entrée 31, ces impulsions étant débarrassées de tous les signaux parasites.

Les moyens 34 qui permettent de mesurer la durée des impulsions enregistrées par les moyens 33 et d'indiquer l'instant qui correspond à la moitié de cette durée pour chacune de ces impulsions, comprennent un circuit logique 54, constitué de manière connue, qui reçoit sur son entrée 55 les impulsions $I_1$ en provenance du comparateur 53 et sur une entrée 56, des impulsions d'une horloge 57.

Ce circuit logique et cette horloge sont associés à un compteur 58 qui prend en compte toutes les impulsions d'horloge pendant la durée de chaque impulsion $I_1$. Il est bien évident que la fréquence des impulsions d'horloge est bien supérieure à la fréquence des impulsions $I_1$. Les moyens 34 comprennent également un registre 59 et un comparateur 60. Ce comparateur 60 est relié, d'une part, à la sortie du compteur 58 et, d'autre part, à la sortie du registre 59. La sortie du compteur 58 est également reliée à une entrée 61 du registre 59.

Le fonctionnement des moyens 34 qui permettent de mesurer la durée de chaque impulsion et d'indiquer l'instant correspondant à la moitié de cette durée, sera mieux compris en se référant au diagramme de la figure 12. Ce diagramme représente en fonction du temps t, la succession des impulsions $I_1$ à la sortie 36 des moyens d'enregistrement 33. Pour deux passages successifs du détecteur sur la discontinuité, le milieu de cette discontinuité est situé à la même distance par rapport au flanc montant de l'impulsion $I_1$. Ainsi, sur le diagramme représenté sur la figure, on suppose que les temps $t_i$ et $t_{i+1}$ sont égaux pour les passages i et i + 1 du détecteur sur la discontinuité. L'apparition du flanc montant de l'impulsion $I_1$ pour le passage i déclenche le comptage des impulsions d'horloge ; ce comptage cesse au flanc descendant de cette impulsion $I_1$, pour le passage i. Ce déclenchement et cet arrêt sont réalisés grâce au signal de commande délivré sur la sortie 62 du circuit logique 54. Le contenu du compteur pour ce passage i est alors divisé par 2, ce qui permet d'obtenir en sortie de ce compteur, un signal binaire correspondant à la moitié des impulsions d'horloge comptées pendant la durée de l'impulsion $I_1$ au passage i. Cette configuration binaire correspondant au temps $t_i$ du passage i, est enregistrée dans le registre 59. Le compteur est alors remis à 0 après cet enregistrement. L'apparition du flanc montant correspondant à l'impulsion $I_1$ du passage i + 1 déclenche à nouveau le compteur. Le contenu de ce compteur est alors comparé au contenu $t_i$ du registre ; lorsque le contenu du compteur durant le passage i + 1 est égal au contenu du registre, c'est-à-dire à la valeur binaire $t_i$ correspondant à la moitié de la durée du passage i, le comparateur délivre une impulsion $I'_1$ qui va commander les moyens d'enregistrement 35 de la valeur angulaire de la position du détecteur par rapport à la position de référence x'x. Le comptage n'en est pas arrêté pour autant et il ne cesse qu'à l'apparition du flanc descendant de l'impulsion $I_1$ correspondant au passage $i + 1$. Le contenu du compteur est alors divisé par deux et c'est le temps $t_{i+1}$ correspondant à la moitié de la durée du passage $i + 1$ qui est ensuite enregistré dans le registre. Le contenu du compteur, lors du passage $i + 2$ est alors comparé au temps $t_{i+1}$. Le processus se reproduit de manière identique pour toutes les autres impulsions $I_3$ en provenance du comparateur 53.

Ainsi, les moyens $R_1$ qui permettent de commander le déplacement du porteur et d'enregistrer les coordonnées X, Y, des différentes positions du porteur le long de la discontinuité, permettent également d'enregistrer, en relation avec ces coordonnées, la position angulaire du détecteur par rapport à la direction de référence pour chacune de ces coordonnées. Les valeurs de ces positions angulaires sont fournies par les moyens d'enregistrement 35 donnant la valeur angulaire de la direction du porteur, par rapport à la direction de référence x'x. Les moyens d'enregistrement 35 peuvent être constitués de circuits logiques connus qui, pour chaque impulsion $I'_1$, commandent l'enregistrement dans $R_1$, de la tension $V_C$ du curseur du potentiomètre R. En effet, cette tension est proportionnelle à chaque instant à la valeur de l'angle entre la direction du détecteur et la direction de référence.

Dans le cas où la discontinuité à détecter est constituée par une simple ligne sur la surface, le système de l'invention comprend uniquement les moyens 33 qui permettent d'enregistrer les impulsions I en provenance du détecteur 3, et les moyens d'enregistrement 35 qui donnent la valeur angulaire de la direction du détecteur, par rapport à la direction de référence x'x. Dans ce cas, les moyens 35 sont commandés directement par les impulsions $I_1$ délivrées sur la sortie 36 des moyens 33. En effet, puisque la discontinuité est réduite à une simple ligne, il n'est pas nécessaire de détecter comme précédemment, le milieu de cette discontinuité pour déterminer la forme de celle-ci. Les impulsions I délivrées par le détecteur sont de faible durée et c'est à l'instant où survient chacune de ces impulsions que la position angulaire du détecteur est à repérer. Il en résulte que dans cette application, le système de l'invention est simplifié.

## Revendications

1. Système de détection et de localisation de discontinuité de surface par un faisceau lumineux, comprenant :
— un détecteur (D) comportant des moyens d'émission (1) d'un faisceau incident convergent de lumière monochromatique, en direction de la discontinuité (M), des moyens de réception (2) de la lumière réfléchie sur la surface et un transducteur optoélectronique (3) de la lumière réfléchie, associé aux moyens de réception (2) ;
— des moyens pour déplacer (B) le détecteur (D) de façon que le faisceau incident balaye transversalement la discontinuité (M) et le voisinage de celle-ci, caractérisé en ce qu'il comprend en outre :
— un porteur (P) capable de mouvoir les moyens de déplacement (B) du détecteur (D) le long de la discontinuité (M), ce porteur (P) étant associé à des moyens de repérage ($R_1$) de sa position par rapport à un système fixe de coordonnées (OX, OY), les moyens de déplacement étant constitués par un bras mobile (B) par rapport au porteur (P), le détecteur (D) étant fixé sur ce bras (B) qui est commandé par des moyens de déplacement (A) propres fixés au porteur (P),
— des moyens de repérage ($R_2$, $R_3$) reliés aux moyens de réception (2) du détecteur (D) et au bras mobile (B), pour repérer les positions angulaires ($\theta_1$, $\theta_2$) successives de ce détecteur (D) par rapport à une direction de référence (x'-x) liée au porteur (P), lorsque ce porteur (P) occupe différentes positions le long de la discontinuité (M) et lorsque le faisceau incident passe sur la discontinuité (M).

2. Système selon la revendication 1, caractérisé en ce que les moyens de repérage ($R_2$, $R_3$) de chaque position angulaire du détecteur comprennent des moyens pour déterminer la position angulaire ($\theta_1$, $\theta_2$) du détecteur (D) par rapport à ladite direction de référence (x', x), à chaque fois que le faisceau incident passe par un point situé sur la discontinuité (M).

3. Système selon la revendication 2, caractérisé en ce que les moyens ($R_2$, $R_3$) pour déterminer la position angulaire ($\theta_1$, $\theta_2$) du détecteur (D) à chaque fois que le faisceau incident passe par un dit point situé sur la discontinuité (M), comprennent des moyens (33) pour enregistrer chaque impulsion (I) provenant du transducteur optoélectronique (3), et des moyens (34) pour enregistrer pour chacune de ces impulsions (I), la valeur de l'angle compris entre une ligne de repérage de position du détecteur (D) et ladite direction de référence (x'-x), cette ligne de repérage de position du détecteur (D) passant par un point déterminé du porteur (P) et par un point du détecteur (D), caractéristique de la position du détecteur (D).

4. Système selon la revendication 3, la discontinuité étant délimitée par deux lignes en regard ($B_1$, $B_2$), caractérisé en ce que les moyens de repérage ($R_2$, $R_3$) de chaque position angulaire du détecteur (D) comprennent des moyens ($R_3$) pour déterminer la position angulaire ($\theta_1$, $\theta_2$) du détecteur (D) par rapport à ladite direction de référence (x'-x), à chaque fois que le faisceau incident passe par un point situé dans l'intervalle séparant les lignes ($B_1$, $B_2$) délimitant la discontinuité (M).

5. Système selon la revendication 3, caractérisé en ce que les moyens (33) pour enregistrer chaque impulsion (I) comprennent un circuit (37) de mise en forme de ces impulsions.

6. Système selon la revendication 5, caractérisé en ce que le circuit de mise en forme comprend un amplificateur (37) à grand gain, associé à un ensemble de filtrage (38) du bruit de fond accompagnant ces impulsions.

7. Système selon la revendication 6, caractérisé en ce que l'ensemble de filtrage comprend au moins un filtre (38) associé à des moyens (39) pour comparer le signal de sortie de ce filtre avec une tension continue de référence flottante correspondant au niveau moyen du signal sortant du filtre.

8. Système selon la revendication 4, caractérisé en ce que les moyens ($R_2$, $R_3$) pour déterminer la position angulaire ($\theta_1$, $\theta_2$) du détecteur à chaque fois que le faisceau incident passe par un dit point situé dans l'intervalle séparant les deux lignes ($B_1$, $B_2$) délimitant la discontinuité (M), comprennent des moyens (33) pour enregistrer chaque impulsion (I) provenant du transducteur optoélectronique (3), ces impulsions présentant une durée correspondant au passage du faisceau incident dans l'intervalle séparant deux lignes ($B_1$, $B_2$) délimitant la discontinuité (M), des moyens (34) pour mesurer la durée de chacune de ces impulsions, des moyens (58, 59) pour indiquer l'instant qui correspond à la moitié de cette durée et donc au passage du faisceau incident par un point situé entre et à égale distance des deux lignes ($B_1$, $B_2$) délimitant la discontinuité (M), et les moyens (60) pour enregistrer à cet instant la valeur de l'angle compris entre une ligne de repérage de position du détecteur (D) et ladite direction de référence (x'-x), cette ligne de repérage de position du détecteur (D) passant par un point déterminé du porteur (P) et par un point du détecteur (D), caractéristique de la position du détecteur (D).

9. Système selon la revendication 8, caractérisé en ce que les moyens (34) pour mesurer la durée de chaque impulsion du transducteur (3) et pour indiquer l'instant correspondant à la moitié de cette durée, comprennent une horloge (57) associée à un compteur (58) et à un circuit logique (54) commandant le comptage des impulsions d'horloge pendant la durée de chaque impulsion du transducteur (3), une sortie de ce compteur (58) délivrant un signal binaire correspondant à la moitié du nombre des impulsions d'horloge comptées pendant cette durée.

10. Système selon la revendication 9, caractérisé en ce que les moyens (34) pour mesurer la durée de chaque impulsion et pour indiquer l'instant correspondant à la moitié de cette durée comprennent en outre un registre (59) apte à enregistrer le signal binaire correspondant à la moitié du nombre des impulsions d'horloge comptées pendant ladite durée, un comparateur (60) recevant, d'une part, le contenu du registre et, d'autre part, le signal binaire suivant, issu du compteur (58) et correspondant aux impulsions d'horloge comptées au cours de la durée de l'impulsion suivante pour un autre passage du faisceau incident du détecteur (D), dans l'intervalle séparant les deux lignes ($B_1$, $B_2$), délimitant la discontinuité (M), une sortie de ce comparateur (60) délivrant une impulsion ($I'_1$) de commande et des moyens (35) d'enregistrement de la valeur dudit angle.

11. Système selon l'une quelconque des revendications 3 à 10, caractérisé en ce que le bras mobile (B) présente une forme telle que le détecteur (D) soit situé sur une ligne passant par ledit point caractéristique de la position du détecteur (D) et par ledit point déterminé du porteur (P).

12. Système selon l'une quelconque des revendications 1 à 10, caractérisé en ce que des moyens d'émission (1) du faisceau incident comprennent une source à laser (7), des moyens de focalisation (10) du faisceau émis par la source, une fibre optique (9) associée à ces moyens de focalisation et apte à diriger le faisceau focalisé sous un angle d'incidence constant au voisinage de la ou des lignes ($B_1$, $B_2$) délimitant la discontinuité (M), les moyens de réception (2) comportant des moyens de focalisation de la lumière réfléchie correspondant au faisceau incident, et un filtre interférentiel interposé entre la surface et le transducteur optoélectronique (3), l'axe optique des moyens de focalisation (2) de la lumière réfléchie, du filtre interférentiel et du transducteur (3) présentant un angle de réflexion (6) égal à l'angle d'incidence (r).

13. Système selon la revendication 12, caractérisé en ce qu'une fibre optique est interposée entre les moyens de focalisation de la lumière réfléchie et le filtre interférentiel.

14. Système selon la revendication 12, caractérisé en ce que les moyens pour déplacer (A), le détecteur (D) de façon à réaliser ledit balayage comprennent un levier de commande (13) du bras (B) supportant le détecteur (D) coopérant avec une came en cœur (11), entraînée en rotation de façon à provoquer un mouvement alterné du bras (B).

15. Système selon la revendication 12, caractérisé en ce que les moyens pour déplacer (A) le détecteur (D) de façon à réaliser ledit balayage, comprennent des moyens hydrauliques (17, 18) de commande d'un mouvement alterné du bras (B) supportant le détecteur (D).

16. Système selon la revendication 12, caractérisé en ce que les moyens pour déplacer (A) le détecteur (D) de façon à réaliser ledit balayage comprennent un ensemble de type « cabestan » (28, 29, 62), commandant le mouvement alterné du bras (B).

## Claims

1. System for detecting and fixing the position of surface discontinuities by a light beam comprising :

— a detector (D) comprising emission means (1) for a converging incident beam of monochromatic light towards the discontinuity (M), receiving means (2) for light reflected from the surface, and an optical-electronic transducer (3) for the reflected light associated with the receiving means (2) ;

— means (B) for displacing the detector (D) so that the incident beam transversely scans the discontinuity (M) and its neighbourhood, characterized in that it additionally comprises :

— a carrier member (P) adapted to move the displacement means (B) of the detector (D) lengthways of the discontinuity (M), said carrier member (P) being associated with means (R₁) for locating its position with respect to a fixed system of coordinates (OX, OY), the displacement means comprising an arm (B) which is movable with respect to the carrier member (P), the detector (D) being fixed on said arm (B) which is controlled by appropriate displacement means (A) fixed to the carrier member (P),

— location means (R₂, R₃) connected to the receiving means (2) of the detector (D) and to the movable arm (B) to locate successive angular positions (θ₁, θ₂) of the detector (D) with respect to a reference direction (x'-x) intrinsic to the carrier member (P), when said carrier member (P) occupies different positions lenthways of the discontinuity (M) and when the incident beam passes over the discontinuity (M).

2. System according to Claim 1, characterized in that the location means (R₂, R₃) for each angular position of the detector comprise means for determining the angular position (θ₁, θ₂) of the detector (D) with respect to said reference direction (x',x) each time the incident light beam passes a point located on the discontinuity (M).

3. System according to Claim 2, characterized in that the means (R₂, R₃) for determining the angular position (θ₁, θ₂) of the detector (D) each time the incident beam passes a said point located on the discontinuity (M) comprise means (33) for registering each pulse (I) provided by the optical-electronic transducer (3), and means (34) for registering for each of said pulses (I) the value of the angle between a position line of the detector (D) and said reference direction (x', x), said position location line of the detector (D) passing a predetermined point of the carrier member (P) and a point of the detector (D) characteristic of the position of the detector (D).

4. System according to Claim 3, the discontinuity being bounded by two facing lines (B₁, B₂), characterized in that the location means (R₂, R₃) for each angular position of the detector (D) comprise means (R₃) for determining the angular position (θ₁, θ₂) of the detector (D) with respect to said reference direction (x'-x) each time the incident beam passes a point located in the interval separating the lines (B₁, B₂) bounding the discontinuity (M).

5. System according to Claim 3, characterized in that the means (33) for registering each pulse (I) comprise a shaping circuit (37) for said pulses.

6. System according to Claim 5, characterized in that the shaping circuit comprises a high gain amplifier (37) associated with a filtering unit (38) for background noise accompanying said pulses.

7. System according to Claim 6, characterized in that the filtering unit comprises at least one filter (38) associated with means (39) for comparing the output signal from said filter with a continuous floating reference potential corresponding to the mean level of the output signal from the filter.

8. System according to Claim 4, characterized in that the means (R₂, R₃) for determining the angular position (θ₁, θ₂) of the detector each time the incident beam passes a said point located in the interval between the two lines (B₁, B₂) delimiting the discontinuity (M) comprise means (33) for registering each pulse (I) from the optical-electronic transducer (3), said pulses having a duration corresponding to the passage of the incident beam across the interval separating two lines (B₁, B₂) bounding the discontinuity (M), means (34) for measuring the duration of each pulse, means (58, 59) for indicating the instant corresponding to half said duration, and thus to passage of the incident beam past a point located between and equidistant from the two lines (B₁, B₂) bounding the discontinuity (M), and means (60) for registering at said instant, the value of the angle between a position locating line of the detector (D) and said reference direction (x'-x), said position locating line of the detector (D) passing a determined point of the carrier member (P) and a point of the detector (D) characteristic of the position of the detector (D).

9. System according to Claim 8, characterized in that the means (34) for measuring the duration of each pulse from the transducteur (3) and for indicating the instant corresponding to half said duration, comprise a clock (57) associated with a counter (58) and a logic circuit (54) commanding counting of the clock pulses during the duration of each transducer pulse (3), an output of said counter (58) delivering a digital signal corresponding to half the number of clock pulses counted during said interval.

10. System according to Claim 9, characterized in that the means (34) for measuring the duration of each pulse and for indicating the instant corresponding to half said duration, additionally comprise a register (59) adapted to register a digital signal corresponding to half the number of clock pulses counted during said interval, a comparator (60) receiving on the one hand the content of the register and, on the other hand, the following digital signal from the counter (58) and corresponding to clock pulses counted during the course of the following pulse by another passage of the incident beam of the detector (D) in the interval separating two lines (B₁, B₂), delimiting the discontinuity (M), and output of said comparator (60) delivering a command pulse (I'₁) and means (35) for registering the value of said angle.

11. System according to any on of Claims 3 to 10, characterized in that the movable arm (B) has such a form that the detector (D) is situated on a line passing said point characteristic of the position of the detector (D) and said predetermined point of the carrier member (P).

12. System according to any of Claims 1 to 10, characterized in that the emission means (1) of the incident beam comprise a laser source (7), focussing means (10) for the beam emitted by said source, a fibre optic (9) associated with said focussing means and adapted to direct the focussed beam at a constant angle of incidence in the vicinity of said line or lines (B₁, B₂) bounding the discontinuity (M), the receiving means (2) comprise focussing means for the reflected light corresponding to the incident beam, and an interference filter interposed between the surface and the optical-electronic transducer (3), the optical axis of the focussing means (2) for the reflected light, the interference filter and the transducer (3) forming an angle of reflection (6) equal to the angle of incidence (r).

13. System according to Claim 12, characterized in that an optical fibre is interposed between the focussing means for reflected light and the interference filter.

14. System according to Claim 12, characterized in that the means (4) for moving the detector (D) to provide said scanning comprise lever (13) for the arm (B) supporting the detector (D) cooperating with a heart cam (11) rotatable whereby to provide alternating movement of the arm (B).

15. System according to Claim 12, characterized in that the means (A) for moving the detector (D) to provide said scanning comprise hydraulic means (17, 18) producing an alternating movement of the arm (B) supporting the detector (D).

16. System according to Claim 12, characterized in that the means (A) for moving the detector (D) to produce said scanning comprise assembly (28, 29, 62) commanding alternating movement of the arm (B).

**Ansprüche**

1. System zur Detektion und Lokalisation von Oberflächendiskontinuitäten mit einem Lichtbündel, enthaltend :

— einen Detektor (D) mit einer Sendeeinrichtung (1) zum Aussenden eines monochromatischen konvergenten Lichtbündels in Richtung der Diskontinuität (M), einer Empfangseinrichtung (2) zum Aufnehmen des von der Oberfläche reflektierten Lichts und einen optoelektronischen Wandler (3) für das reflektierte Licht, der der Empfangseinrichtung (2) zugeordnet ist ;

— eine Einrichtung (B) zum Versetzen des Detektors (D) in der Weise, daß das abgegebene Lichtbündel die Diskontinuität (M) und deren Umgebung quer überstreicht, dadurch gekennzeichnet,

— daß sie außerdem aufweist : einen Träger (P), der die Versetzeinrichtung (B) des Detektors (D) längs der Diskontinuität (M) bewegen kann und der einer Ortungseinrichtung (R₁) zum Orten seiner Position gegenüber einem festen Koordinatensystem (OX, OY) zugeordnet ist, daß die Versetzeinrichtung von einem Arm (B) gebildet ist, der genenüber dem Täger (P) beweglich ist, der Detektor (D) auf dem Arm (P) befestigt ist, der von der Versetzeinrichtung (A), die in geeigneter Weise am Träger (P) befestigt ist, gesteuert ist,

— Ortungseinrichtungen (R₂, R₃), die der Empfangseinrichtung (2) des Detektors (D) und dem beweglichen Arm (P) zugeordnet sind, um die aufeinanderfolgenden Winkelpositionen (θ₁, θ₂) des Detektors (D) in bezug auf eine vom Träger (P) vorgegebene Bezugsrichtung (x'-x) zu bestimmen, wenn der Träger (P) unterschiedliche Positionen längs der Diskontinuität (M) einnimmt und das ausgesandte Lichtbündel über die Diskontinuität (M) läuft.

2. System nach Anspruch 1, dadurch gekennzeichnet, daß die Ortungseinrichtungen (R₁, R₂) für die Ortung jeder Winkellage des Detektors Einrichtungen zum Bestimmen der Winkellage (θ₁, θ₂) des Detektors (D) gegenüber der Bezugsrichtung (x'-x) jedes Mal dann, wenn das abgegebene Lichtbündel über einen Punkt läuft, der auf der Diskontinuität (M) liegt, enthält.

3. System nach Anspruch 2, dadurch gekennzeichnet, daß die Einrichtungen (R₂, R₃) zum Bestimmen der Winkellage (θ₁, θ₂) des Detektors (D) jedes Mal dann, wenn das ausgesandte Lichtbündel über einen gegebenen Punkt, der auf der Diskontinuität (M) liegt, streicht, Einrichtungen (33) enthält, um jeden Impuls (I) zu registrieren, der von dem optoelektronischen Wandler (3) stammt, und Einrichtungen (34) enthält, um für jeden dieser Impulse (I) die Größe des Winkels zu registrieren, der zwischen einer Linie zum Bestimmen der Lage des Detektors (D) und der Bezugsrichtung (x'-x) eingeschlossen ist, wobei die Linie zum Bestimmen der Detektorlage durch einen Punkt, der von dem Träger (P) bestimmt wird, und einen Punkt des Detektors (D), der für die Lage des Detektors (D) eigentümlich ist, läuft.

4. System nach Anspruch 3, wobei die Diskontinuität durch zwei einander gegenüberstehende Linien (B₁, B₂) begrenzt ist, dadurch gekennzeichnet, daß die Ortungseinrichtungen (R₂, R₃) für jede Winkellage des Detektors (D) Einrichtungen (R₃) zum Bestimmen der Winkellage (θ₁, θ₂) des Detektors (D) gegenüber der Bezugsrichtung (x'-x) jedes Mal dann, wenn das ausgesandte Lichtbündel über einenPunkt läuft, der im Zwischenraum, der die beiden Linien (B₁, B₂), die die Diskontinuität (M) begrenzen, voneinander trennt, enthält.

5. System nach Anspruch 3, dadurch gekennzeichnet, daß die einrichtung (33) zum Registrieren jedes Impulses (I) einen Impulsformerkreis (37) enthält.

6. System nach Anspruch 5, dadurch gekennzeichnet, daß der Impulsformerkreis einen Verstärker (37) mit hohem Verstärkungsfaktor enthält, der einer Filteranordnung (38) zugeordnet ist, die das die Impulse begleitende Hintergrundrauschen unterdrückt.

7. System nach Anspruch 6, dadurch gekennzeichnet, daß die Filteranordnung wenigstens ein Filter (38) enthält, das eine Einrichtung (39) zum Vergleichen des Filterausgangssignals mit einer druchgehenden Referenzspannung zugeordnet ist, welch letztere sich entsprechend dem Mittelwert des Filterausgangssignals verändert.

8. System nach Anspruch 4, dadurch gekennzeichnet, daß die Einrichtungen (R₂, R₃) zum Bestimmen der Winkellage (θ₁, θ₂) des Detektors jedes Mal, wenn das ausgesandte Lichtbündel über einen gegebenen Punkt im Intervall zwischen den zwei Linien (B₁, B₂), die die Diskontinuität (M) begrenzen, läuft, eine Einrichtung (33) zum Registrieren jedes Impulses (I) aufweist, der von dem optoelektronischen Wandler (3) stammt, wobei die Impulse eine Dauer aufweisen, die dem Lauf des ausgesandten Lichtbündels im Intervall zwischen den zwei Linien (B₁, B₂), die die Diskontinuität (M) begrenzen, entspricht, daß sie weiterhin eine Einrichtung (34) zum Messen der Dauer eines jeden dieser Impulse enthält, weiterhin Einrichtungen (58, 59) zum Bestimmen des Augenblicks, der der Mitte dieser Dauer und daher dem Lauf des ausgesandten Lichtstrahles über einen Punkt, der gleichdistant zwischen den zwei Linien (B₁, B₂) liegt, die die Diskontinuität begrenzen, enthält, und weiterhin eine Einrichtung (60), um in diesem Augenblick die Größe des Winkels zu registrieren, der zwischen einer Ortungslinie für die Lage des Detektors (D) und der Bezugsrichtung (x'-x) eingeschlossen ist, wobei die Ortungslinie für die Lage des Detektors (D) durch einen Punkt, der vom Träger (P) bestimmt ist, und einen Punkt des Detektors (D), der für die Detektorlage charakteristisch ist, verläuft.

9. System nach Anspruch 8, dadurch gekennzeichnet, daß die Einrichtung (34) zum Messen der Dauer eines jeden Impulses des Wandlers (3) und zum Anzeigen des der Mitte der Impulsdauer entsprechenden Augenblicks einen Taktgeber (57) enthält, der einem Zähler (58) und einem logischen Kreis (54) zugeordnet ist, der die Zählung des Impulse des Taktgebers während der Dauer jedes Impulses des Wandlers (3) steuert, wobei ein Ausgang des Zählers (58) ein Binärsignal liefert, das der Hälfte der Anzahl des Impulse des Taktgebers entspricht, die während dieser Dauer gezählt wurden.

10. System nach Anspruch 9, dadurch gekennzeichnet, daß die Einrichtung (34) zum Messen der Dauer jedes Impulses und zum Anzeigen des Augenblicks, der der Hälfte der Impulsdauer entspricht, weiterhin ein Register (59) enthält, das zum Speichern des Binärsignals bestimmt ist, das der Hälfte der Zahl der Taktimpulse entspricht, die während jener Dauer gezählt wurden, und einen Komparator (60) enthält, der einerseits den Inhalt des Registers und andererseits das folgende Binärsignal erhält, das von dem Zähler (58) abgegeben wird und das den Taktimpulsen entspricht, die während einer nachfolgenden Impulsdauer für einen anderen Lauf des Detektorlichtbündels im Intervall, das die zwei Linien (B₁, B₂), die die Diskontinuität (M) begrenzen, gezähl werden, wobei ein Ausgang dieses Zählers (60) einen Steuerimpuls (I'₁) liefert, und daß eine Einrichtung (35) zum Speichern des Wertes dieses Winkels vorhanden ist.

11. System nach einem der Ansprüche 3 bis 10, dadurch gekennzeichnet, daß der bewegliche Arm (P) eine solche Gestalt aufweist, daß der Detektor (D) auf einer Linie liegt, die durch den für die Lage des Detektors (D) charakteristischen Punkt und durch den von dem Träger (P) bestimmten Punkt verläuft.

12. System nach einem der Ansprüche 1 bis 10, dadurch gekennzeichnet, daß die Lichtbündel-Sendeeinrichtung (1) eine Laserquelle (7) und eine Fokussiereinrichtung (10) für das von der Quelle abgegebene Strahlenbündel und einen optischen Faserleiter (9) enthält, der der Fokussiereinrichtung zugeordnet ist und dazu bestimmt ist, das fokussierte Lichtbündel unter einem konstanten Einfallwinkel in den Bereich der Linie(n), B₁, B₂ zu leiten, die die Diskontinuität (M) begrenzt bzw. begrenzen, und daß die Empfangseinrichtung (2) eine Fokussierungseinrichtung für das reflektierte Licht entsprechend dem ausgesendeten Lichtbündel und ein zwischen der Oberfläche und dem optoelektronischen Wandler (3) befindliches Interferenzfilter, wobei die optische Achse der Fokussiereinrichtung für das reflektierte Licht, des Interferenzfilters und des Wandlers (3) einen Reflexionswinkel (6) aufweisen, der so groß ist, wie der Einfallswinkel(r).

13. System nach Anspruch 12, dadurch gekennzeichnet, daß ein optischer Faserlichtleiter zwischen die Fokussiereinrichtung für das reflektierte Licht und das Interferenzfilter eingesetzt ist.

14. System nach Anspruch 12, dadurch gekennzeichnet, daß die Einrichtung (A) zur Versetzen des Detektors (D) zum Zwecke des Überstreichens einen Steuerhebel (13) am Arm (B), der den Detektor (P) trägt, aufweist, dermit einer Nockenscheibe (11) zusammenwirkt, die in Rotation versetzt ist, um eine alternierende Bewegung des Armes (D) hervorzurufen.

15. System nach Anspruch 12, dadurch gekennzeichnet, daß die Einrichtung (A) zum Versetzen des Detektors (D) zum Zwecke des Überstreichens hydraulische Mittel (17, 18) zum Hervorrufen einer alternierenden Bewegung des Armes (B), der den Detektor (D) trägt, aufweist.

16. System nach Anspruch 12, dadurch gekennzeichnet, daß die Einrichtung (A) zum Versetzen des Detektors (D) zum Zwecke des Überstreichens eine Kurbeleinrichtung (28, 29, 62) aufweist, die die alternierende Bewegung des armes (B) hervorruft.

**FIG.1**

# FIG.2

(a)

(b)

**FIG. 3**

**FIG.4**

**FIG. 5**

**FIG.12**

FIG.6

FIG.7

FIG.8

FIG.9

FIG.10

FIG.11